(19) Europäisches Patentamt
European Patent Office
Office européen des brevets

(11) **EP 4 130 113 A1**

(12) **EUROPEAN PATENT APPLICATION**
published in accordance with Art. 153(4) EPC

(43) Date of publication:
08.02.2023 Bulletin 2023/06

(51) International Patent Classification (IPC):
*C08J 5/18* (1974.07)    *B32B 27/32* (1968.09)
*B65D 65/40* (1968.09)    *C08L 23/00* (1974.07)
*B29C 55/04* (1985.01)    *B29K 23/00* (1985.01)

(21) Application number: 21781394.8

(22) Date of filing: 25.03.2021

(52) Cooperative Patent Classification (CPC):
B32B 27/32; B65D 65/40; C08J 5/18; C08L 23/00;
B29C 55/04

(86) International application number:
PCT/JP2021/012698

(87) International publication number:
WO 2021/200593 (07.10.2021 Gazette 2021/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.03.2020 JP 2020060691

(71) Applicant: TOYOBO CO., LTD.
Osaka-shi
Osaka 5300001 (JP)

(72) Inventors:
• TOMATSU, Wakato
Inuyama-shi, Aichi 484-8508 (JP)
• NISHI, Tadashi
Inuyama-shi, Aichi 484-8508 (JP)

(74) Representative: Vossius & Partner
Patentanwälte Rechtsanwälte mbB
Siebertstraße 3
81675 München (DE)

(54) **POLYOLEFIN-BASED RESIN FILM, AND LAMINATE USING SAME**

(57) It is provided that a polyolefin-based resin film having the following feature. Even when the polyolefin resin film is laminated with a base material film having a large strain in the molecular orientation axis such as a biaxially oriented polyamide-based resin film, a packaging bag obtained from the thus-obtained laminated body is excellent in transparency, heat-sealability, straight cuttability, ease of tearing, bag-making processability, and bag-breaking resistance, and that whiskers are less likely to occur at the time of opening. A polyolefin-based resin film formed from a polypropylene-based resin composition, the polyolefin-based resin film containing: in a total of 100 parts by weight of the polypropylene-based resin composition, 20 parts by weight or more and 95 parts by weight or less of a propylene-$\alpha$ **olefin random** copolymer containing a metallocene-based olefin polymerization catalyst; 0 parts by weight or more and 75 parts by weight or less of a propylene-$\alpha$ **olefin random copolymer containing a** Ziegler-Natta-based olefin polymerization catalyst; and 5 parts by weight or more and 15 parts by weight or less of at least one type of an elastomer selected from the group consisting of an ethylene-butene copolymer elastomer, a propylene-butene copolymer elastomer, and an ethylene-propylene copolymer elastomer, wherein a heat shrinkage ratio in a direction in which a heat shrinkage ratio is larger among a longitudinal direction and a width direction of the polyolefin-based resin film is 1% or more and 10% or less, and an orientation coefficient $\Delta$**Nx in an x**-axis direction calculated from a refractive index of the polyolefin-based resin film is 0.0130 or more and 0.0250 or less.

EP 4 130 113 A1

**Description**

TECHNICAL FIELD

The present invention relates to a polyolefin-based resin film. Further, the present invention relates to a laminated body comprising the polyolefin-based resin film and at least one type of a base film selected from the group consisting of a polyamide resin film, a polyester resin film, and a polypropylene resin film.

BACKGROUND ART

A packaging bag is produced by thermocompression bonding (hereinafter, referred to as heat-sealing) of the peripheral edges of a laminated body mainly including a base film such as a polyamide resin film, a polyester resin film, or a polypropylene resin film and a polyolefin-based resin film at a temperature close to the melting point of the polyolefin-based resin film in a state where the surfaces of the polyolefin-based resin film are in contact with each other.

As food packaging bags, so-called semi-retort pouches suitable for long-term food storage are widely used. Such food packaging bags are sterilized by pressurized steam at about 100°C after food is packed therein.

**Against the backdrop of women's participation in society, a trend toward the** nuclear family, and aging society, demand for semi-retort pouches has recently increased as well as retort pouches, and at the same time, semi-retort pouches are required to have improved properties.

For example, such semi-retort pouches are recently often packed in boxes during transportation before sold in stores, and are therefore required to be less likely to break even when dropped in such a process, particularly even when dropped under refrigeration.

Further, when a food content is taken out of a packaging bag, particularly a semi-retort pouch, the packaging bag is often torn with fingers from an incision that is so-called a notch made in the peripheral heat-sealed portion of the packaging bag. However, when a conventional laminated body is used, there is a fear that a packaging bag cannot be torn in parallel with one edge of the packaging bag, usually in parallel with the horizontal direction and is therefore **obliquely torn, or a phenomenon called "Nakiwakare" occurs in which the front**-side laminated body and the back-side laminated body of a packaging bag are opposite in tearing direction in the vertical direction, and therefore it is difficult to take out a food content, a food content makes fingers or clothing dirty, or fingers are burned when a food content has been heated.

The reason why it is difficult to tear the packaging bag in parallel with one edge of the packaging bag is that a base film used for the laminated body is distorted, that is, the molecular orientation axis direction of the base film is not parallel with one edge of the packaging body.

Such a problem does not occur if the molecular orientation axis direction of the base film can be made the same with the tearing direction of the packaging bag. The molecular orientation axis direction of the widthwise center of a produced wide stretched film is coincident with the machine direction of the film, and therefore a resulting packaging bag can be torn in parallel with one edge of the packaging bag. However, the molecular orientation axis direction of the widthwise end of the base film is inclined from the machine direction of the film, and therefore the tearing direction of a resulting packaging bag is inclined in the molecular orientation axis direction of the base film even if the film is processed so that the machine direction of the film matches the longitudinal or transverse direction of the packaging bag. It is practically impossible to completely avoid the procurement of a base film using the widthwise end of film. In addition, the degree of distortion tends to be larger than ever before due to an increase in the production speed or width of a base film.

Therefore, attempts have been made to solve such a problem by devising a polyolefin-based resin film to be laminated on a base film.

Patent Document 1 discloses a film obtained by uniaxially stretching a polyolefin-based resin sheet containing a propylene-ethylene block copolymer and an ethylene-propylene copolymer on a heat-seal layer 3.0 times. However, there are problems with haze, heat-seal strength, tear strength, bag-breaking resistance, and "**Nakiwakare**".

Patent Document 2 discloses a film obtained by uniaxially stretching a polyolefin-based resin sheet containing a propylene-ethylene block copolymer, an ethylene-propylene copolymer, and a propylene-butene copolymer. However, there is a problem of visibility of contents.

From Patent Document 3, a film obtained by uniaxially stretching about 5 times a polyolefin-based resin sheet containing a propylene-ethylene random copolymer and an ethylene-butene copolymer is known. However, such a film has a problem in bag-making processability and bag-breaking resistance.

From Patent Document 4 and Patent Document 5, films obtained by uniaxially stretching 4 to 6 times a polyolefin-based resin sheet containing a propylene-ethylene block copolymer, a propylene-ethylene random copolymer, or a propylene-ethylene-butene random copolymer, and an ethylene-butene elastomer, are known. However, such films have problems that dimensional stability against heat is poor, and the packaging body is deformed due to heat applied during retorting treatment, resulting in impaired appearance, and a problem that the packaging body is easily broken at a low temperature.

From Patent Document 6, a film obtained by uniaxially stretching about 4 times a polyolefin-based resin sheet mainly composed of a propylene-ethylene block copolymer is known. However, such a film has the following problem. That is, when a four-side sealed bag or the like manufactured from a laminated body of the film and a biaxially stretched polyamide film and the like is tear-opened from a notch, filamentous film pieces are separated from the heat-seal edge (i.e., occurrence of whiskers).

PRIOR ART DOCUMENTS

PATENT DOCUMENTS

Patent Document 1: Japanese Patent No. 5790497
Patent Document 2: Japanese Patent No. 5411935
Patent Document 3: JP- A -2018-79583
Patent Document 4: JP- A-2014-141302
Patent Document 5: JP-T-2012-500307
Patent Document 6: WO2019/123944A1

SUMMARY OF THE INVENTION

PROBLEM TO BE SOLVED BY THE INVENTION

It is an object of the present invention to provide a polyolefin-based resin film such that a packaging bag obtained from a laminated body has excellent transparency, heat-sealability, straight cuttability, ease of tearing, bag-making processability, and bag-breaking resistance, and is less likely to have occurrence of whiskers at the time of opening of the packaging bag even if the laminated body is obtained by laminating the polyolefin-based resin film on a base film whose molecular orientation axis is greatly distorted, such as a biaxially-stretched polyamide-based resin film.

In order to attain the object, the present inventors have conducted thorough studies as follows. That is, a film is formed from a polypropylene-based resin composition containing: a propylene-$\alpha$ olefin random copolymer containing a metallocene-based olefin polymerization catalyst; a propylene-$\alpha$ olefin random copolymer containing a Ziegler-Natta-based olefin polymerization catalyst; and at least one type of an elastomer selected from the group consisting of an ethylene-butene copolymer elastomer, a propylene-butene copolymer elastomer, and an ethylene-propylene copolymer elastomer. Further, in the film, although polymer molecules are caused to be oriented mainly in one direction by stretching, heat shrinkage ratio in each direction is reduced and orientation of molecular chain in the longitudinal direction is caused to fall within a specific range. Then, the film is laminated with a base material film having a large strain in the molecular orientation axis such as a biaxially oriented polyamide-based resin film to obtain a laminated body. The inventors have found that a packaging bag obtained from the laminated body is excellent in transparency, heat-sealability, straight cuttability, ease of tearing, bag-making processability, and bag-breaking resistance, and that whiskers are less likely to occur at the time of opening, and the present inventors have completed the present invention.

That is, the present invention has the following aspects.

[1] A polyolefin-based resin film formed from a polypropylene-based resin composition, the polyolefin-based resin film containing: in a total of 100 parts by weight of the polypropylene-based resin composition, 20 parts by weight or more and 95 parts by weight or less of a propylene-$\alpha$ olefin random copolymer containing a metallocene-based olefin polymerization catalyst; 0 parts by weight or more and 75 parts by weight or less of a propylene-$\alpha$ **olefin random copolymer containing a Ziegler**-Natta-based olefin polymerization catalyst; and 5 parts by weight or more and 15 parts by weight or less of at least one type of an elastomer selected from the group consisting of an ethylene-butene copolymer elastomer, a propylene-butene copolymer elastomer, and an ethylene-propylene copolymer elastomer, wherein a heat shrinkage ratio in a direction in which a heat shrinkage ratio is larger among a longitudinal direction and a width direction of the polyolefin-based resin film is 1% or more and 10% or less, and an orientation coe**fficient $\Delta$Nx in an x**-axis direction calculated from a refractive index of the polyolefin-based resin film is 0.0130 or more and 0.0250 or less.

[2] The polyolefin-based resin film according to the above [1], comprising a configuration of a plurality of layers including at least two layers.

[3] The polyolefin-based resin film according to the above [1] or [2], wherein a haze of the polyolefin-based resin film is 3% or more and 35% or less.

[4] The polyolefin-based resin film according to any one of the above [1] to [3], wherein a tear strength in the direction in which the heat shrinkage ratio is larger among the longitudinal direction and the width direction of the polyolefin-based resin film is not larger than 0.7 N.

[5] The polyolefin-based resin film according to any one of the above [1] to [4], wherein a concentration of an anti-blocking agent of a layer positioned on at least one surface of the polyolefin-based resin film is 3000 ppm or less.

[6] A laminated body comprising the polyolefin-based resin film according to any one of the above [1] to [5], and a biaxially oriented film formed from at least one type of a polymer selected from the group consisting of a polyamide resin film, a polyester resin film, and a polypropylene resin film.

[7] The laminated body according to the above [6], wherein a straight cuttability in a direction in which a heat shrinkage ratio is larger among the longitudinal direction and width direction of the laminated body is not larger than 10 mm, and a tear strength in the direction in which a heat shrinkage ratio is larger among the longitudinal direction and width direction of the laminated body is not larger than 1.2 N.

[8] A packaging body formed from the laminated body according to the above [6] or [7].

## EFFECT OF THE INVENTION

The polyolefin-based resin film of the present invention is suitable for providing a packaging bag excellent in transparency, heat-sealability, straight cuttability, ease of tearing, bag-making processability, and bag-breaking resistance, and that is less likely to have occurrence of whiskers at the time of opening.

Hereinbelow, the present invention will be described in detail.

(Propylene-$\alpha$ olefin random copolymer)

In the present invention, examples of the propylene-$\alpha$ **olefin random copolymer** include copolymers of propylene and at least one C4 **to C20** $\alpha$-olefin other than propylene.

Examples of the C2 or C4 **to C20** $\alpha$-olefin monomer to be used include ethylene, butene-1, pentene-1, 4-methyl-pentene-1, hexene-1, and octene-1. The C2 or C4 to C20 $\alpha$-olefin monomer is not particularly limited, but is preferably ethylene in terms of stretchability and low shrinkage. If necessary, two or more propylene-$\alpha$ olefin random copolymers may be used in combination.

The lower limit of melt flow rate (MFR) of the propylene-$\alpha$ olefin random copolymer is preferably 0.6 g/10 min, more preferably 1.0 g/10 min, even more preferably 1.2 g/10 min. If the MFR is 0.6 g/10 min or more, uniformity of film thickness is less likely to be impaired. The upper limit of melt flow rate of the propylene-$\alpha$ olefin random copolymer is preferably 12.0 g/10 min, more preferably 9.0 g/10 min, even more preferably 8.0 g/10 min.

The lower limit of melting point of the propylene-$\alpha$ olefin random copolymer is not particularly limited, but is preferably 115°C, more preferably 120°C. If the melting point is 115°C or more, heat resistance is easy to be improved or the inner surfaces of a bag is less likely to be fused together when the bag is subjected to retort treatment. The upper limit of melting point of the propylene-$\alpha$ **olefin random copolymer** is not particularly limited, but is preferably 155°C, more preferably 150°C. If the melting point is 155°C or less, low temperature sealability is easily obtained.

The copolymerization ratio of $\alpha$ **olefin** component in the propylene-$\alpha$ **olefin** random copolymer is preferably 1 to 15% by weight, preferably 3 to 10% by weight. The copolymerization ratio of a propylene component in the propylene-ethylene block copolymer is preferably 85 to 99% by weight, preferably 90 to 97% by weight.

The present invention contains a propylene-$\alpha$ **olefin random copolymer containing** a metallocene-based olefin polymerization catalyst. This is caused by polymerization using the metallocene-based olefin polymerization catalyst.

The propylene-$\alpha$ **olefin random copolymer containin**g the metallocene-based olefin polymerization catalyst is characterized by having: when compared with a propylene-$\alpha$ olefin random copolymer containing a Ziegler-Natta-based olefin polymerization catalyst, a narrower molecular weight distribution; and less components on the low molecular weight side and less components on the high molecular weight side with respect to the weight-average molecular weight as an index. It has been newly found that when the propylene-$\alpha$ **olefin** random copolymer containing the metallocene-based olefin polymerization catalyst is used, occurrence of whiskers is suppressed. Further, when the propylene-$\alpha$ olefin random copolymer containing the metallocene-based olefin polymerization catalyst is used, transparency, flexibility, and strength are excellent.

It is noted that the metallocene-based olefin polymerization catalyst is a catalyst composed of: (i) a transition metal compound (so-called metallocene compound) of group 4 of the periodic table containing a ligand having a cyclopentadienyl skeleton; (ii) a co-catalyst that reacts with the metallocene compound to be able to realize activation to a stable ionic state; and, as necessary, (iii) an organoaluminum compound, and any publicly-known catalyst can be used.

Among propylene-$\alpha$ olefin random copolymers containing a metallocene-based olefin polymerization catalyst, one that is particularly suitable is a propylene-ethylene random copolymer in which the main monomer is propylene and a certain amount of ethylene is copolymerized. In this description, random copolymers are listed in descending order of monomer composition ratio.

Specific examples of the propylene-α **olefin random copolymer** containing a metallocene-based olefin polymerization catalyst include: propylene-ethylene random copolymer containing ethylene content: 7% by weight (WFX4M manufactured by Japan Polypropylene Corporation, density: 900 kg/m$^3$, MFR at 230°C and 2.16 kg: 7.0 g/10 min, melting point: 125°C, metallocene-based catalyst), propylene-ethylene random copolymer containing ethylene content: 7% by weight (WFW4M manufactured by Japan Polypropylene Corporation, density: 900 kg/m$^3$, MFR at 230°C and 2.16 kg: 7.0 g/10 min, melting point: 136°C, metallocene catalyst), and the like.

In the present invention, other than the propylene-α **olefin random copolymer** containing the metallocene-based olefin polymerization catalyst, a propylene-α **olefin random** copolymer containing a Ziegler-Natta-based olefin polymerization catalyst can also be used.

Among propylene-α **olefin** random copolymers B containing a Ziegler-Natta-based olefin polymerization catalyst, one that is particularly suitable is a propylene-ethylene random copolymer in which the main monomer is propylene and a certain amount of ethylene is copolymerized. In this description, random copolymers are listed in descending order of monomer composition ratio.

Specific examples of the propylene-α **olefin random copolymer containing the** Ziegler-Natta-based olefin polymerization catalyst include: a propylene-ethylene random copolymer having an ethylene content of 4% by weight (SUMITOMO NOBLEN WF577PG manufactured by Sumitomo Chemical Co., Ltd., MFR at 230°C and load of 2.16 kg: 3.2 g/10 min, melting point: 142°C); a propylene-ethylene-butene random copolymer having an ethylene content of 1% by weight and a butene content of 3.6% by weight (SUMITOMO NOBLEN FL8115A manufactured by Sumitomo Chemical Co., Ltd., MFR at 230°C and load of 2.16 kg: 7.0 g/10 min, melting point: 148°C); and the like.

(Copolymer elastomer)

In the present invention, in order to increase the bag-breaking resistance at the time of falling of the packaging bag obtained by using the film of the present invention, a copolymer elastomer is contained.

As the copolymer elastomer in the present invention, an olefin-based thermoplastic copolymer elastomer that exhibits rubber-like elasticity at a temperature near ordinary temperature, and/or an olefin-based thermoplastic copolymer elastomer that exhibits relatively high Shore hardness and good transparency are preferable. It is preferable that an olefin-based thermoplastic copolymer elastomer that exhibits rubber-like elasticity at a temperature near ordinary temperature, and an olefin-based thermoplastic copolymer elastomer that exhibits relatively high Shore hardness and good transparency are used in combination.

When these are used in combination, even when straight cuttability and ease of tearing are provided, transparency, heat-sealability, and bag-breaking resistance are also easily obtained.

The copolymer elastomer has a melt flow rate (MFR) at 230°C and a load of 2.16 kg of 0.2 to 5.0 g/10 min, a density of 820 to 930 kg/m$^3$, and a molecular weight distribution (Mw/Mn) determined by GPC of 1.3 to 6.0. If the melt flow rate (MFR) of the copolymer elastomer used in the present invention at 230°C and a load of 2.16 kg is 0.2 g/10 min or more, uniformity of kneading is likely to occur or fish eye is less likely to occur. If the melt flow rate (MFR) is 5.0 g/min or less, bag-breaking resistance is likely to be improved.

**The limiting viscosity [η] of the copolymer elastomer used in the present** invention is preferably 1.0 to 5.0 dl/g, preferably 1.2 to 3.0 dl/g in terms of maintaining heat-seal strength and impact strength and **bag drop impact strength. If the limiting viscosity [η] is 1.0** dl/g or more, uniformity of kneading is likely to occur or fish eye is less likely to occur. If the **limiting viscosity [η] is 5.0** dl/g or less, bag-breaking resistance and heat-seal strength are likely to be improved.

An example of the olefin-based thermoplastic copolymer elastomer that exhibits rubber-like elasticity at a temperature near ordinary temperature is an ethylene-butene copolymer elastomer, which an elastomer that is amorphous or has low crystallinity and that is obtained by copolymerizing ethylene and butane.

The copolymerization ratio of an ethylene component in the ethylene-propylene copolymer elastomer is preferably 55 to 85% by weight, preferably 60 to 80% by weight. The copolymerization ratio of a butene component in the ethylene-butene copolymer elastomer is preferably 15 to 45% by weight, preferably 20 to 40% by weight.

A specific example of the ethylene-butene copolymer elastomer is an ethylene-butene copolymer elastomer having a butene content of 22 wt%, a melting point of 55°C, a density of 870 kg/m$^3$, and MFR (230°C, 2.16 kg) of 6.7 g/10 min (TAFMER A4070S manufactured by Mitsui Chemicals, Inc.).

Among elastomers, an example of the olefin-based thermoplastic copolymer elastomer that exhibits relatively high Shore hardness and good transparency is a propylene-butene copolymer elastomer being a crystalline elastomer obtained by copolymerizing propylene and butene.

A specific example of the propylene-butene copolymer elastomer is a propylene-butene copolymer elastomer having a butene content of 20 wt%, a melting point of 83°C, a density of 870 kg/m$^3$, and MFR (230°C, 2.16 kg) of 7.0 g/10 min (TAFMER XM7080 manufactured by Mitsui Chemicals, Inc.).

(Additive)

The polyolefin-based resin composition in the present invention may contain an anti-blocking agent. The number of types of the anti-blocking agent may be one. However, when two or more types of inorganic particles having different particle diameters and shapes are blended, complicated projections are formed also in terms of unevenness of the film surface, and a higher blocking prevention effect can be obtained.

The anti-blocking agent to be added is not limited in particular. Inorganic particles such as spherical silica, irregular silica, zeolite, talc, mica, alumina, hydrotalcite, and aluminum borate, and organic particles such as polymethyl methacrylate and ultra high molecular weight polyethylene can be added.

In a case of a multilayer configuration of two layers or three or more layers, the anti-blocking agent may be added to all of the layers. However, when there is unevenness at the surface of a layer on the side to which a biaxially oriented film is laminated, poor appearance may be caused in the lamination process. Therefore, it is preferable to add the anti-blocking agent only to the layer on the side where films are heat-sealed.

The layer on the side where a biaxially oriented film is laminated is referred to as a laminate layer, and the surface thereof is referred to as a laminate surface. Meanwhile, the layer on the side where films are heat-sealed is referred to as a heat-seal layer, and the surface thereof is referred to as a heat-seal surface.

The concentration of the anti-blocking agent to be added is preferably 3000 ppm or less with respect to the polyolefin-based resin composition of the layer to which the anti-blocking agent is added, and more preferably 2500 ppm or less. When the concentration is 3000 ppm or less, falling off of the anti-blocking agent can be reduced.

The polyolefin-based resin composition of the present invention may contain an organic lubricant. This makes it possible to improve the lubricity of a laminated film or the effect of preventing blocking, thereby improving handleability of the film. The reason for this is considered to be that the organic lubricant is present on the surface of the film due to bleeding out, and therefore a lubricating effect or a releasing effect is developed.

The organic lubricant to be added preferably has a melting point equal to or more than ordinary temperature. Examples of the organic lubricant include fatty acid amides and fatty acid esters.

More specific examples thereof include oleic amide, erucic amide, behenic amide, ethylene bisoleic amide, hexamethylene bisoleic amide, and ethylene bisoleic amide. These organic lubricants may be used singly, but are preferably used in combination of two or more of them because lubricity and the effect of preventing blocking can be maintained even in more severe environments.

If necessary, the polyolefin-based resin composition of the present invention may contain appropriate amounts of an antioxidant, an antistatic agent, an anti-fogging agent, a neutralizer, a nucleating agent, a colorant, other additives, an inorganic filler and the like in any layer, without interfering with the achievement of the object of the present invention.

As the antioxidant, a phenol-based antioxidant and a phosphite-based antioxidant may be used in combination, or an antioxidant having the skeleton of a phenol-based antioxidant and the skeleton of a phosphite-based antioxidant in one molecule may be used singly. As a neutralizer, calcium stearate and the like are exemplified.

(Polyolefin-based resin film)

The polyolefin-based resin film of the present invention may be formed as a single-layer, or a plurality of layers of two or more layers. For example, the polyolefin-based resin film may have a configuration of a heat-seal layer/laminate layer, or a three-layer configuration of heat-seal layer/intermediate layer/laminate layer. Further, each layer may be composed of a plurality of layers.

The heat-seal layer is the layer positioned on the outermost surface side of the polyolefin-based resin film. Heat-seal layers are subjected to thermocompression bonding while being opposed to each other, whereby a packaging body can be manufactured.

The layer positioned on the outermost surface side on the opposite side of the heat-seal layer is the laminate layer, and the laminate layer can be laminated with, by being attached to, a base material film such as a polyester film or a polyamide film.

In the case of a three-layer configuration of heat-seal layer/intermediate layer/laminate layer, if the end portion of a film product of the present invention or the film product itself is recovered to be made into pellets again, and the resultant pellets are used as the raw material of the intermediate layer, it is possible to reduce the cost of the film product without impairing characteristics such as tearability, heat-seal strength, and bag-breaking resistance.

(Propylene-a olefin random copolymer)

In each layer of the polyolefin-based resin film of the present invention, in a total of 100 parts by weight of a polyolefin-based resin, the content of the propylene-α **olefin random** copolymer containing a metallocene-based olefin polymerization catalyst is in a range of 20 to 95 parts by weight. When the content of the propylene-α **olefin random copolymer** containing a metallocene-based olefin polymerization catalyst is 25 parts by weight or more, occurrence of whiskers is likely to be suppressed. When the content of the propylene-α olefin random copolymer containing a metallocene-based olefin polymerization catalyst is 95 parts by weight or less, bag-breaking resistance is excellent. The content of the propylene-α **olefin random** copolymer containing a metallocene-based olefin polymerization catalyst is preferably in a range of 25 to 90 parts by weight.

In each layer of the polyolefin-based resin film of the present invention, in a total of 100 parts by weight of a polyolefin-based resin, the content of the propylene-α **olefin random** copolymer containing a Ziegler-Natta-based olefin polymerization catalyst is in a range of 0 to 75 parts by weight. When the content of the propylene-α olefin random copolymer containing a Ziegler-Natta-based olefin polymerization catalyst is 75 parts by weight or less, occurrence of whiskers is likely to be suppressed.

(Copolymer elastomer)

In each layer of the polyolefin-based resin film of the present invention, in a total of 100 parts by weight of the polypropylene-based resin, the content of at least one type elastomer selected from the group consisting of an ethylene-propylene copolymer elastomer, a propylene-butene copolymer elastomer, and an ethylene-butene copolymer elastomer is in a range of 5 parts by weight or more and 15 parts by weight or less. When elastomers that is at least one type selected from the group consisting of the ethylene-propylene copolymer elastomer, the propylene-butene copolymer elastomer, and the ethylene-butene copolymer elastomer are contained in 5 parts by weight or more, bag-breaking resistance is excellent. When elastomers that is at least one type selected from the group consisting of the ethylene-propylene copolymer elastomer, the propylene-butene copolymer elastomer, and the ethylene-butene copolymer elastomer are contained in 15 parts by weight or less, bag-making processability is excellent. Preferably, the content of at least one type elastomer selected from the group consisting of an ethylene-propylene copolymer elastomer, a propylene-butene copolymer elastomer, and an ethylene-butene copolymer elastomer is in a range of 7 to 13 parts by weight.

The polyolefin-based resin film of the present invention has a sea-island structure composed of a matrix polymer and a domain, and thus can exhibit good bag-breaking resistance. The matrix polymer has, as the main component, a portion of which the main component is propylene of the propylene-α **olefin random copolymer**. The domain has, as the main component, a portion of which the main component is ethylene of copolymer elastomer.

(Method for producing polyolefin-based resin film)

As a method for forming the polyolefin-based resin film of the present invention, for example, an inflation method or a T-die method may be used. However, a T-die method is preferred from the viewpoint of enhancing transparency or ease of drafting. An inflation method uses air as a cooling medium, but a T-die method uses a cooling roll, and is therefore a production method advantageous for increasing the cooling speed of an unstretched sheet. By increasing the cooling speed, crystallization of an unstretched sheet can be prevented, which is advantageous in that high transparency can be achieved and the burden of stretching in a subsequent process can easily be controlled. For these reasons, the polyolefin-based resin film of the present invention is more preferably formed by a T-die method.

The lower limit of temperature of the cooling roll at the time when a melted raw material resin is cast to obtain a non-oriented sheet is preferably 15°C, more preferably 20°C. If the temperature of the cooling roll is less than the above lower limit, there is a case where the contact between an unstretched sheet and the cooling roll is poor due to the occurrence of condensation on the cooling roll, which causes a thickness defect. The upper limit of temperature of the cooling roll is preferably 50°C, more preferably 40°C. If the temperature of the cooling roll is 50°C or less, the transparency of the polyolefin-based resin film is less likely to deteriorate.

A method for stretching a non-oriented sheet is, for example, an inflation method, a tenter transverse stretching method, or a roll longitudinal stretching method may be used. However, a roll longitudinal stretching method is preferred in terms of orientation controllability.

Here, the longitudinal stretching refers to the direction in which the film flows from casting of the raw resin composition to winding stretched film, and the transverse direction refers to the direction perpendicular to the flow direction.

By stretching a non-oriented sheet under appropriate conditions, straight cuttability is developed. This is because molecular chains are regularly arranged in a stretch direction.

The lower limit of a stretch ratio is preferably 3.0 times. If the stretch ratio is 3.0 times or more, tear strength in the stretching direction is less likely to increase so that straight cuttability is improved. The lower limit of the stretch ratio is more preferably 3.5 times, further preferably 3.8 times.

The upper limit of the stretch ratio is preferably 5.5 times. If the stretch ratio is 5.5 times or less, orientation is less likely to excessively proceed or a heat shrinkage in the longitudinal direction is less likely to be large. The upper limit of the stretch ratio is more preferably 5.0 times, further preferably 4.5 times.

The lower limit of a roll temperature during stretching is preferably 80°C. If the roll temperature is 80°C or more, stretch stress applied to the film is less likely to increase so that heat shrinkage ratio of the longitudinal direction is not too high. The lower limit of the roll temperature is more preferably 90°C.

The upper limit of the stretch roll temperature is preferably 140°C. If the stretch roll temperature is 140°C or less, stretching stress applied to the film is not too low, the heat shrinkage ratio in the longitudinal direction of the film is not too low, and the film is less likely to be fused to the stretch roll. The upper limit of the stretch roll temperature is more preferably 130°C, further preferably 125°C, particularly preferably 115°C.

It is preferred that before the unstretched sheet is subjected to a stretching process, the temperature of the sheet is increased by contact with a pre-heating roll.

The lower limit of temperature of the pre-heating roll at the time when the non-oriented sheet is stretched is preferably 80°C, more preferably 90°C. If the temperature of the pre-heating roll is 80°C or more, stretch stress is not too high and thickness variation is less likely to be large. The upper limit of temperature of the pre-heating roll is preferably 140°C, more preferably 130°C, further preferably 125°C. If the temperature of the pre-heating roll is 140°C or less, the film does not easily stick to the roll so that thickness variation is less likely to be large.

The polyolefin-based resin film subjected to the stretching process is preferably subjected to annealing treatment to prevent heat shrinkage. Examples of a method for annealing treatment include a roll heating method and a tenter method, but a roll heating method is preferred in terms of simplicity of equipment or ease of maintenance.

Since annealing treatment reduces the internal stress of the film, thereby suppressing heat shrinkage ratio of the film, heat shrinkage ratio in the longitudinal direction and heat-seal strength are not sacrificed compared to merely increase the stretch ratio in order to improve tearability like a conventional method. Annealing treatment may give adverse effect on properties other than heat shrinkage ratio in the longitudinal direction and heat-seal strength, but in the present invention, the adverse effects on bag-breaking resistance and the like can be suppressed by using a copolymer elastomer in combination.

The lower limit of temperature of annealing treatment is preferably 80°C. If the temperature of annealing treatment is 80°C or more, a heat shrinkage ratio in the longitudinal direction is less likely to high or tear strength is likely to increase so that the finished quality of a packaging bag after bag making or retorting is less likely to deteriorate. The lower limit of temperature of annealing treatment is more preferably 100°C, particularly preferably 110°C.

The upper limit of temperature of annealing treatment is preferably 140°C. When the temperature of annealing treatment is higher, a heat shrinkage ratio of the longitudinal direction is more likely to reduce. However, if the temperature of annealing treatment exceeds the above upper limit, there is a case where the thickness of the film varies or the film is fused to production equipment. The upper limit of temperature of annealing treatment is more preferably 135°C.

In an annealing step, a relaxation step can be provided by sequentially reducing the conveyance speed of the film, such as, for example, reducing the rotation speed of the roll after heating. When the relaxation step is provided, the heat shrinkage ratio in the longitudinal direction of the manufactured polyolefin-based resin film can be reduced.

The upper limit of the relaxation rate in the relaxation step is preferably 10% and more preferably 8%. When the relaxation rate is 10% or less, the heat shrinkage ratio in the longitudinal direction can be prevented from becoming too low. The lower limit of the relaxation rate is preferably 1% and more preferably 3%. When the relaxation rate is 1% or more, the heat shrinkage ratio in the longitudinal direction of the polyolefin-based resin film is less likely to be increased.

In the present invention, at least one surface of the polyolefin-based resin film described above or a surface of the laminate layer is preferably subjected to surface activation by corona treatment or the like. This improves the strength of lamination between the polyolefin-based resin film and a base film.

(Film thickness)

The lower limit of the thickness of the polyolefin-based resin film according to the present invention is preferably 20 $\mu$m, more preferably 30 $\mu$m, further preferably 40 $\mu$m, particularly preferably 50 $\mu$m. If the thickness is 20 $\mu$m or more, the polyolefin-based resin film is relatively thicker than a base film, and therefore straight cuttability of a laminated body is less likely to deteriorate, the film is easy to process due to resilience, or impact resistance is easily obtained so that bag-breaking resistance is easily obtained. The upper limit of thickness of the film is preferably 150 $\mu$m, **more preferably 100 $\mu$m, further preferably 80 $\mu$m**. If the thickness of the film **is 150 $\mu$m or less**, there is a case where the film is easy to process due to not too high resilience or an appropriate packaging body is easy to produce.

Properties of polyolefin-based resin film will be described.

(Orientation coefficient in longitudinal direction)

**An orientation coefficient $\triangle$Nx in the longitudinal direction used in the present** invention can be calculated

by formula 1.

$$\Delta Nx = Nx - (Ny + Nz)/2 \text{ (formula 1)}$$

Nx: refractive index in longitudinal direction
Ny: refractive index in direction perpendicular to longitudinal direction and plane direction
Nz: refractive index in thickness direction

The lower limit of the orientation **coefficient ΔNx in the longitudinal direction of** the polyolefin-based resin film of the present invention is preferably 0.0130, more preferably 0.0150, and further preferably 0.0160. **When the orientation coefficient ΔNx is** 0.0130 or more, straight cuttability of the packaging body is easily obtained. The upper limit of the orientation **coefficient ΔNx in the longitudinal direction is preferably 0.0250, more preferably** 0.0220. **When the orientation coefficient ΔNx is 0.0250 or less, the heat**-seal strength is less likely to be reduced.

(Heat shrinkage ratio)

The upper limit of heat shrinkage ratio of the polyolefin-based resin film according to the present invention in the direction in which the heat shrinkage at 120°C is larger among the longitudinal direction and the width direction of the polyolefin-based resin film is 10%. If the heat shrinkage ratio in the longitudinal direction is 10% or less, tear strength is smaller, and the appearance of a packaging body is excellent due to large shrinkage during heat sealing or during retorting of the packaging body. The upper limit of the heat shrinkage ratio in the direction in which the heat shrinkage ratio at 120°C is larger among the longitudinal direction and the width direction of the polyolefin-based resin film is preferably 8%, more preferably 7%, further preferably 6%, particularly preferably 5%.

The lower limit of heat shrinkage ratio of the polyolefin-based resin film according to the present invention in the direction in which the heat shrinkage ratio at 120°C is larger among the longitudinal direction and the width direction of the polyolefin-based resin film is not larger is 1%. If the heat shrinkage ratio in the longitudinal direction is 1% or more, tear strength is easily to be small. The lower limit of heat shrinkage ratio in the direction in which the heat shrinkage ratio at 120°C is larger among the longitudinal direction and the width direction of the polyolefin-based resin film is preferably 2%.

In order to realize straight cuttability, the lower limit of the orientation coefficient Δ**Nx in the** x-axis direction needs to be 0.0130. However, when the upper limit of the heat shrinkage ratio at 120°C in the direction in which the heat shrinkage ratio at 120°C is larger among the longitudinal direction and the width direction of the polyolefin-based resin film is 10%, whiskers are less likely to occur. The reason is as follows. That is, when thermal melting is caused by heat-sealing, orientation is less likely to remain at the seal portion or the seal end. Thus, the film laminated with the base material film is less likely to shrink during the heat-sealing, because the film is restricted by the base material film. Accordingly, it is thought that force is less likely to be applied to the film, and thus, orientation is less likely to be caused again in the film.

The upper limit of the heat shrinkage ratio in a direction at a right angle with respect to the direction in which the heat shrinkage ratio at 120°C is larger among the longitudinal direction and the width direction of the polyolefin-based resin film of the present invention is preferably 1%. When the heat shrinkage ratio is 1% or less, tear strength in the longitudinal direction is easily reduced, and straight cuttability is easily obtained. The upper limit of the heat shrinkage ratio is preferably 0.5%. The lower limit of the heat shrinkage ratio in the direction at a right angle with respect to the direction in which the heat shrinkage ratio at 120°C is larger among the longitudinal direction and the width direction of the polyolefin-based resin film of the present invention is -5%. When the heat shrinkage ratio is -5% or more, elongation occurs during heat-sealing, and appearance of the packaging body may be impaired. The lower limit of the heat shrinkage ratio is preferably -3%.

(Tear strength)

The upper limit of tear strength of the polyolefin-based resin film according to the present invention in the direction in which a heat shrinkage ratio is larger among the longitudinal direction and width direction is preferably 0.70 N, preferably 0.50 N, more preferably 0.45 N, further preferably 0.40 N. If the teat strength is 0.70 N or less, the laminated film is easy to tear.

The lower limit of tear strength of the polyolefin-based resin film according to the present invention in the direction in which a heat shrinkage ratio is larger among the longitudinal direction and width direction is 0.10 N. If the tear strength in the longitudinal direction is 0.10 N or more, bag-breaking resistance is easily obtained. The lower limit of the tear strength is more preferably 0.20 N.

(Haze)

The lower limit of haze of the polyolefin-based resin film of the present invention is preferably 3.0%, and more preferably 5.0%. When the haze is not lower than 3.0%, the state is not a state where unevenness of the film surface is extremely little, and thus, inner surface blocking of the packaging body is less likely to occur. The upper limit of the haze is preferably 35.0%, more preferably 20.0%, further preferably 15.0%, still further preferably 10%, and most preferably 8%. When the haze is not higher than 35.0%, visibility through the packaging body can be easily obtained.

(Piercing strength)

The lower limit of piercing strength of the polyolefin-based resin film according to the present invention is preferably 3 N, more preferably 4 N/$\mu$m, and further preferably 5 N. If the piercing strength is 3 N or more, a pin hole is less likely to be formed when a projection hits a packaging body. The upper limit of the piercing strength is preferably 10 N. If the piercing strength is 10 N or less, handling of the film or a laminated body using the film is easy due to not too high resilience.

(Piercing strength)

**The lower limit of piercing strength per 1$\mu$m of the polyolefin**-based resin film according to the present invention is preferably 0.05 **N/$\mu$m, more preferably** 0.09 **N/$\mu$m. If the** piercing strength is **0.05 N/$\mu$m or more**, a pin hole is less likely to be formed when a projection hits a packaging body. The upper limit of the piercing strength is preferably 1.0 **N/$\mu$m**, more **preferably 0.8 N/$\mu$m, and further preferably 0.5 N/ $\mu$m**. If the piercing strength **is 1.0 N/$\mu$m or** less, handling of the film or a laminated body using the film is easy due to not too high resilience.

(Accelerated blocking strength)

The lower limit of accelerated blocking strength of the polyolefin-based resin film of the present invention is preferably 20 mN/70 mm, more preferably 30 mN/70 mm, further preferably 100 mN, still further preferably 200 mN, and particularly preferably 250 mN. When the accelerated blocking strength is 20 mN/7 mm or more, resilience of the film is easily obtained. The upper limit of the accelerated blocking strength is preferably 600 mN/70 mm, more preferably 500 mN/70 mm, further preferably 400 mN/70 mm, and still further preferably 300 mN. When the accelerated blocking strength is 600 mN/70 mm or less, blocking is less likely to occur at the inner surfaces of the packaging body.

(Wetting tension)

The lower limit of wetting tension of the surface of the polyolefin-based resin film according to the present invention to be laminated on at least one film selected from the group consisting of a polyamide resin film, a polyester resin film, and a polypropylene resin film is preferably 30 mN/m, more preferably 35 mN/m. If the wetting tension is 30 mN/m or more, lamination strength is less likely to reduce. The upper limit of the wetting tension is preferably 55 mN/m, more preferably 50 mN/m. If the wetting tension is 55 mN/m or less, blocking between films is less likely to occur when the polyolefin-based resin film is wound onto a roll.

(Structure and production method of laminated body)

A laminated body using the polyolefin-based resin film according to the present invention is obtained by laminating the polyolefin-based resin film used as a sealant on at least one film selected from the group consisting of a polyamide resin film, a polyester resin film, and a polypropylene resin film. Further, by a known technique, for the purpose of imparting adhesiveness or barrier properties, the base film may be subjected to coating or vapor deposition, or aluminum foil may further be laminated on the base film.

More specifically, the laminated body may have a structure such as biaxially-stretched PET film/aluminum foil/sealant, biaxially-stretched PET film/biaxially-stretched nylon film/sealant, biaxially-stretched nylon film/sealant, biaxially-stretched polypropylene film/sealant, or biaxially-stretched PET film/biaxially-stretched nylon film/aluminum foil/sealant.

Among them, when a biaxially-stretched nylon film is laminated on a conventional sealant, the straight cuttability of a resulting laminated body is significantly poor. When the polyolefin-based resin film of the present invention is used as a sealant, a laminated body having excellent straight cuttability can be produced whichever of the structures is selected.

A lamination method to be used may be a conventional method such as a dry lamination method or an extrusion lamination method, and a laminated body having excellent straight cuttability can be produced whichever of the lamination methods is used.

Properties of the laminated body will be described.

(Piercing strength)

The lower limit of piercing strength of the laminated body according to the present invention before retorting is preferably 10 N, more preferably 15 N, further preferably 18 N. If the piercing strength is 10 N or more, a pin hole is less likely to be formed when a projection comes into contact with a packaging body. The upper limit of the piercing strength is preferably 45.0 N, more preferably 30.0 N, further preferably 25.0 N. If the piercing strength is 45.0 N or less, handling of the laminated body is easy due to not too high resilience.

(Tear strength)

The upper limit of tear strength in the direction in which the heat shrinkage ratio is larger among the longitudinal direction and the width direction of the laminated body according to the present invention is preferably 1.2 N. If the teat strength is 1.2 N or less, the laminated body is easy to tear. The upper limit of the tear strength is more preferably 1.0 N, further preferably 0.8 N, even more preferably 0.5 N.

(Straight cuttability)

Straight cuttability refers to the ability of a laminated film (a laminated body) to be torn straight in one direction. Measurement was performed by the following method. In the examples, stretching was performed in the longitudinal direction, and therefore the heat shrinkage ratio was high in the longitudinal direction, and the one direction was the longitudinal direction. Therefore, straight cuttability was evaluated only in the longitudinal direction.

A laminated film was cut to obtain a strip sample whose size in the longitudinal direction was 150 mm and size in the direction (the width direction) perpendicular to the longitudinal direction was 60 mm. An incision of 30 mm was made in the center of the short-side edge of the sample along the longitudinal direction. The sample was torn in accordance with JIS K7128-1:1998. The sample was torn 120 mm excluding 30 mm of the incision in the longitudinal direction, and at this time, the distance of shift to the direction (the width direction) perpendicular to the longitudinal direction was measured and an absolute value thereof was recorded. The measurement was performed at N = 3 in both cases where a section on the **observer's right side was held by an upper holder and where a section on the observer's left side** was held by an upper holder, and an average value was calculated in each of the cases. The larger one of the right-side measurement result and the left-side measurement result was used.

(Straight cuttability)

The upper limit of straight cuttability of the laminated body according to the present invention is preferably 10 mm, more preferably 9 mm, further preferably 7 mm. If the straight cuttability is 10 **mm or less, a packaging body is less likely to cause "Nakiwakare"**. The straight cuttability may have a lower limit of 1 mm.

(**"Nakiwakare"**)

The upper limit of **"Nakiwakare"** of the laminated body of the present invention is preferably 12 mm, more preferably 8 mm, further preferably 5 mm, and even more preferably 4 mm. In a case where **"Nakiwakare"** is not larger than 12 mm, when the packaging body is torn, contents are less likely to be spilled. The lower limit may be 1 mm.

(Whisker occurrence rate)

Two sheets of a laminated film with the polyolefin resin film according to the present invention and the base film were heat-sealed in such a manner that their heat-seal film-side surfaces faced to each other to form a four-edge sealed bag whose inside dimension in the longitudinal direction was 120 mm and inside dimension in the direction (the width direction) perpendicular to the longitudinal direction was 170 mm. A notch was made at the edge of the four-edge sealed bad, and the bag was torn with fingers in the longitudinal direction. A whisker occurrence rate calculated from the number of times filamentous film pieces (whiskers) occurred and the number of times of tearing is preferably 30% or less, more preferably 25% or less, further preferably 20% or less, particularly preferably 16% or less, and most preferably 10% or less. The whisker occurrence rate may have a lower limit of 1%.

The polyolefin-based resin film of the present invention was dry-laminated on a base film (biaxially-stretched nylon film manufactured by TOYOBO CO., LTD., N1102, **thickness: 15 $\mu$m, orientation angle: 22° with respect to**

**the** longitudinal direction) using an ester-based adhesive obtained by mixing 33.6 parts by mass of an ester-based adhesive for dry lamination (TM569 manufactured by Toyo-Morton, Ltd.), 4.0 parts by mass of a curing agent (CAT10L manufactured by Toyo-Morton, Ltd.), and 62.4 parts by mass of ethyl acetate so that the amount of the adhesive applied was 3.0 g/m$^2$. A laminated film obtained by lamination was maintained at 40°C for 3 days to perform aging. In this way, a laminated film was obtained.

(Finishing of bag-making)

When the film undergoes heat shrinkage in a step of manufacturing a packaging body while the laminated body is heat-sealed, the portion of the heat shrinkage becomes wrinkled or dimensional defects of the packaging body may be caused. In the final condition where a four-side sealed bag has been manufactured, it is preferable that no wrinkle has occurred at a heat-seal portion, and it is more preferable that there is no waviness at the heat-seal portion. When a wrinkle has occurred at the heat-seal part, appearance of the packaging body may be impaired.

(Shrinkage ratio during retorting)

The upper limit of shrinkage ratio during retorting of the laminated body according to the present invention is preferably 5%. If the shrinkage ratio during retorting exceeds the above upper limit, there is a case where the appearance of a packaging body after retorting is poor. The upper limit of the shrinkage ratio during retorting is more preferably 4%. The lower limit of the shrinkage ratio during retorting in one direction is -5%. If the shrinkage ratio during retorting in one direction is less than the above lower limit, there is a case where elongation after retorting is large, which may cause bag breaking. The lower limit of the shrinkage ratio during retorting in one direction is more preferably -2%, even more preferably 0%.

(Heat-seal strength)

The lower limit of heat-seal strength of the laminated body according to the present invention before retorting is preferably 20 N/15 mm, more preferably 35 N/15 mm, even more preferably 40 N/15 mm. When the heat-seal strength of the laminated body according to the present invention before retorting is 20 N/15 mm or more, it is easy to obtain bag-breaking resistance. The heat-seal strength of 60 N/15 mm is sufficient.

(Heat-seal strength)

The lower limit of heat-seal strength of the laminated body according to the present invention before retorting is preferably 35 N/15 mm, more preferably 40 N/15 mm. If the heat-seal strength is less than the above lower limit, there is a case where bag-breaking resistance deteriorates. The heat-seal strength is preferably maintained at 35 N/15 mm or more even after retort treatment at 121°C for 30 minutes. The upper limit of the heat-seal strength is preferably 60 N/15 mm. In order to allow the heat-seal strength to exceed the above upper limit, for example, the thickness of the film needs to be increased, which may increase costs.

(Packaging body)

The laminated body provided to enclose a food product or the like as a content to protect the content from dirt or gas derived from nature is referred to as a packaging body. The packaging body is produced by, for example, cutting the laminated body and bonding inner surfaces of the laminated body to each other by a hot heat-seal bar or ultrasonic wave sealing to form a bag. For example, a four-edge sealed bag is widely used which is produced by stacking rectangular two sheets of the laminated body in such a manner that their sealant-side surfaces face to each other and heat-sealing four edges. The content may be a food product, but may also be another product such as a daily product. The packaging body may be one having a shape other than a rectangular shape, such as a standing pouch or a pillow packaging body.

Further, a packaging body capable of withstanding heat of thermal sterilization using hot water at 100°C or more obtained by pressurization for boiling point elevation is referred to as a packaging body for retort applications. A film intended to provide such a packaging body is referred to as a film for retort applications.

(Bag-breaking resistance)

A four-edge sealed bag formed from the laminated body of the present invention is repeatedly dropped until the bag breaks to measure the number of times of dropping. The number of times of dropping when 50% of the bags remain without breaking is preferably 5 times or more, more preferably 10 times or more, further preferably 12 times or more, even more preferably 13 times or more, from a practical viewpoint.

EXAMPLES

Hereinbelow, the present invention will be described in detail with reference to examples, but is not limited to these examples. The properties of products obtained in the examples were measured and evaluated by the following methods. In the evaluations, a flow direction of the film in film production is the longitudinal direction, and a direction perpendicular to the flow direction is a width direction.

(1) Resin density

A density was evaluated in accordance with Method D of JIS K7112:1999 (density-gradient tube).
The measurement was performed at N = 3, and an average value was calculated.

(2) Melt flow rate (MFR)

A melt flow rate was measured at 230°C and a load of 2.16 kg on the basis of JIS K-7210-1. The measurement was performed at N = 3, and an average value was calculated.

(3) Haze

Haze was measured in accordance with JIS K7136. The measurement was performed at N = 3 with respect to the polyolefin-based resin film before lamination, and an average value was calculated.

(4) Tear strength

A tear strength was measured in accordance with JIS K7128-1:1998. Evaluation was performed on a polyolefin-based resin film before lamination and a laminated body. The measurement was performed at N = 3 in each of the longitudinal direction and the width direction, and an average value was calculated.

(5) Piercing strength

The piercing strength of a polyolefin-based resin film or a laminated body was **measured at 23°C in accordance with "2. Strength testing method" in "Chapter 3: Apparatuses, containers, and packaging in the Specifications and standards for foods, food additives, etc."** (Public Notice of the Ministry of Health, Labour, and Welfare No. 20 of 1982) in Food Sanitation Act. A needle whose tip had a diameter of 0.7 mm pierced the film at a piercing speed of 50 mm/min to measure strength when the needle passed through the film. The obtained measured value was divided by the thickness of the film to calculate piercing strength **(N/μm) per micrometer of the film. The measurement was performed** at N = 3, and an average value was calculated.

(6) Orientation Coefficient of direction in which heat shrinkage ratio is larger among longitudinal direction and width direction

The refractive index was evaluated according to Test methods for refractive index of chemical products of JIS K 0062:1999. Measurement was performed with N = 3, and an average value was calculated. A direction in which the heat shrinkage ratio at 120°C is larger among the longitudinal direction and the width direction is defined as x-axis direction. The **orientation coefficient ∆Nx in the x**-axis direction was calculated by formula 1.

$$\Delta Nx = Nx - (Ny + Nz)/2 \quad \text{(formula 1)}$$

Nx: refractive index in the longitudinal direction
Ny: refractive index in direction perpendicular to the longitudinal direction and a plane direction
Nz: refractive index in thickness direction

(7) Heat shrinkage ratio

A film before lamination was cut to obtain a 120-mm square sample. Gauge lines were drawn at an interval of 100 mm in each of the longitudinal direction and the width direction. The sample was hung in an oven maintained at 120°C for 30 minutes to be subjected to heat treatment. A distance between the gauge lines was measured, and a heat shrinkage ratio was calculated by the following formula 2. The measurement was performed at N = 3, and an average value was calculated.

$$\text{Heat shrinkage ratio} = (\text{gauge length before heat treatment - gauge length after}$$
$$\text{heat treatment})/\text{gauge length before heat treatment} \times 100 \ (\%) \quad (\text{formula 2})$$

(8) Accelerated blocking strength

The polyolefin-based resin film was cut out into a size of 148 mm in the longitudinal direction and 105 mm in the width direction. Heat-seal surfaces were opposed to each other and stacked with each other. The resultant object was preheated in a 50°C environment for 30 minutes, and then was sandwiched by aluminum plates of which four sides **were 7.0 cm and which were held at 50°C. Using MINI TEST PRESS MP-SCH** manufactured by Toyo Seiki Seisaku-sho, Ltd., the aluminum plates and the sample were pressed under a condition of 50°C and 100 kN, and were held for 15 minutes. The taken out sample was cut so as to be 70 mm in the width direction. The stacked sample was opened by 30 mm, and a metal bar having a diameter of 3 mm was inserted in the sample so as to be parallel in the width direction. The sample was set to Autograph AG-I manufactured by Shimadzu Corporation, and the weight at the time when the metal bar was moved in the longitudinal direction under a condition of 200 mm/min was measured. The measurement was performed with N = 3, and an average value was calculated.

(9) Straight cuttability

Straight cuttability refers to the ability of a laminated body to be torn straight in parallel with one direction. Measurement was performed by the following method. In the examples and the comparative examples, straight cuttability in the stretch direction were developed, so measurements were carried out in the stretch direction.
A laminated body was cut to obtain a strip sample whose size in the stretch direction was 150 mm and size in the direction perpendicular to the measurement direction was 60 mm. An incision of 30 mm was made in the center of the short-side edge of the sample along the measurement direction. The sample was torn in accordance with JIS K7128-1:1998. The sample was torn 120 mm excluding 30 mm of the incision in the stretch direction, and at this time, the distance of shift to the direction perpendicular to the stretch direction was measured and an absolute value thereof was recorded. The measurement was performed at N = 3 in each **case where a section on the observer's right side was held by an upper holder and where a section on the observer's left side was held by an upper holder, and an average value** was calculated in each of the cases. The larger one of the right-side measurement result and the left-side measurement result was used.

**(10) "Nakiwakare"**

Two sheets of a laminated body were heat-sealed in such a manner that their heat-seal film-side surfaces faced to each other to form a four-edge sealed bag whose inside dimension in the stretch direction was 120 mm and inside dimension in the direction perpendicular to the stretch direction was 170 mm. A notch was made at the edge of the four-edge sealed bad, and the bag was torn with fingers in the stretch direction. The bag was cut to the opposite edge, and a gap between the tear lines of the front-side film and the back-side film of the bag was measured. The measurement was performed at N = 3 in each of directions in which the right-hand side was the near side and in which the left-hand side was the near side, and an average value was calculated. The larger one of the measured values was used.

(11) Shrinkage ratio during retorting

A laminated film was cut to obtain a 120-mm square piece. Gauge lines were drawn at an interval of 100 mm in each of the MD direction and the TD direction. Retort treatment was performed with hot water at 121°C for 30 minutes. A distance between the gauge lines was measured, and a shrinkage ratio during retorting was measured by the following formula. The measurement was performed at N = 3 in each of the directions, and an average value was calculated.

$$\text{Shrinkage ratio during retorting} = (\text{gauge length before treatment - gauge length after treatment})/\text{gauge length before treatment} \times 100\ (\%)$$

(12) Finished quality of bag

Two sheets of a laminated body were stacked so that their polyolefin-based resin film-side surfaces faced to each other, and then heat-sealed at a pressure of 0.2 MPa and a heat-seal temperature of 220°C for 1 second using a seal bar having a width of 10 mm to form a four-edge sealed bag whose inside dimension in the longitudinal direction was 120 mm and inside dimension in the width direction was 170 mm. The final conditions of the four-edge sealed bag were visually observed.

**○: The bag was perfectly rectangle without distortion near the heat-sealed portion.**
△: There was a little distortion near the heat-sealed portion.
×: There was a large distortion near the heat-sealed portion so that the edges of the bag were wavy.

(13) Heat-seal strength

Conditions for heat-sealing and conditions for strength measurement are as follows. Two sheets of a laminated body obtained in Example or Comparative Example were stacked so that their polyolefin-based resin film-side surfaces faced to each other, heat-sealed at a pressure of 0.2 MPa and a heat-seal temperature of 220°C for 1 second using a seal bar having a width of 10 mm, and allowed to stand to cool. Test pieces having a size in the longitudinal direction of 80 mm and a size in the width direction of 15 mm were cut out from each of the films heat-sealed at different temperatures, and the heat-sealed portion of each of the test pieces was subjected to peeling at a cross head speed of 200 mm/min to measure peel strength. As a test machine, a universal testing machine 5965 manufactured by Instron was used. The measurement was performed at N = 3 at each heat-seal temperature, and an average value was calculated.

(14) Heat-seal start temperature

A heat-seal start temperature is an item related to productivity at the time when continuous production using a bag-making machine is assumed. Excellent suitability for bag making means that satisfactory sealing performance can be achieved within a temperature range where shrinkage or breakage of a base film does not occur. Evaluation of heat-seal temperature was performed in the following manner.

In the above-described measurement of heat-seal strength, heat-seal strength was measured while the temperature of a heat-seal bar was changed at a pitch of 5°C. The measurement was performed at N = 3 at each heat-seal bar temperature. A weighted average of the heat-seal temperature at a temperature just before exceeding 30 N and the heat-seal temperature at a temperature just after exceeding 30 N was calculated.

(15) Whisker occurrence rate

Two sheets of a laminated film were heat-sealed in such a manner that their heat-seal film-side surfaces faced to each other to form a four-edge sealed bag whose inside dimension in the MD direction was 120 mm and inside dimension in the TD direction was 170 mm. A notch was made at the edge of the four-edge sealed bag, and the bag was torn with fingers in the MD direction. The occurrence rate was calculated based on the number of times filamentous film pieces (whiskers) occurred. The measurement was performed at n = 100 in each of directions in which the right-hand side was the near side and in which the left-hand side was the near side, and the larger measurement values were adopted.

$$\text{Whisker occurrence rate} = \text{the number of times of occurrence of whiskers/the number of times of tearing} \times 100(\%)$$

(16) Bag-breaking resistance

Two sheets of a laminated body were cut out to form a four-edge sealed bag containing 300 mL of saturated saline and having inside dimensions of 170 mm (length) and 120 mm (width). At this time, heat-sealing was performed for 1 second under conditions of a pressure of 0.2 MPa, a seal bar width of 10 mm, and a heat-seal temperature of 220°C. After the bag making, the edges of the four-edge sealed bag were trimmed so that a heat-seal width was 5 mm. The four-edge sealed bag was subjected to retorting at 115°C for 30 minutes. Then, the four-edge sealed bag was allowed to stand in an environment at -5°C for 8 hours, and was dropped onto a flat concrete floor from a height of 1.0 m in such an environment. The four-edge sealed bag was repeatedly dropped until it broke to measure the number of times of repeated dropping. The following criteria were provided. The number of bags for each grade was 20.

◎: The number of times of dropping to achieve a survival rate of 50% was 13 times or more.
○: **The number of times of dropp**ing to achieve a survival rate of 50% was 10 times or more and 12 times or less.
△: The number of times of dropping to achieve a survival rate of 50% was 5 times or more and 9 times or less.
×: The number of times of dropping to achieve a survival rate of 50% was 4 times or less.

(17) Orientation angle

The orientation angle (°) of a base film was measured using a molecular orientation analyzer, MOA-6004 manufactured by Oji Scientific Instruments Co., Ltd. A sample whose size in the longitudinal direction was 120 mm and size in the width direction was 100 mm was cut out and set in the measuring instrument, and a measured value of angle was defined as an orientation angle. It is to be noted that the longitudinal direction is 0°. The measurement was performed at N = 3, and an average value was calculated.

(Example 1)

(Polyolefin-based resin film)

(Raw material used)

With respect to polypropylene-based resin film of Example 1, raw materials were adjusted on the basis of resin composition and proportion thereof of each layer shown in Table 1 described later. These raw materials were mixed so as to be uniform, whereby a mixed raw material for manufacturing a polyolefin-based resin film was obtained.

1) Raw material A: Propylene-ethylene random copolymer WFX4M manufactured by Japan Polypropylene Corporation (ethylene content: 7 wt%, resin density: 900 kg/m$^3$, MFR at 230°C and 2.16 kg: 7.0 g/10 min, melting point: 125°C, metallocene catalyst)
2) Raw material B: Propylene-ethylene random copolymer WFW4M manufactured by Japan Polypropylene Corporation (ethylene content: 7 wt%, resin density: 900 kg/m$^3$, MFR at 230°C and 2.16 kg: 7.0 g/10 min, melting point: 136°C, metallocene catalyst)
3) Raw material C: Propylene-ethylene random copolymer WF577PG manufactured by Sumitomo Chemical Co., Ltd. (ethylene content: 4 wt%, MFR at 230°C and 2.16 kg: 3.2 g/10 min, melting point: 142°C, Ziegler-Natta catalyst)
4) Raw material D: Propylene-butene copolymer elastomer resin XM7080 manufactured by Mitsui Chemicals, Inc. (butene content: 20 wt%, melting point: 83°C, MFR at 230°C and 2.16 kg: 6.7 g/10 min, resin density: 870 kg/m$^3$)
5) Raw material E: Ethylene-butene copolymer elastomer resin A4070S manufactured by Mitsui Chemicals, Inc. (butene content: 22 wt%, melting point: 55°C, MFR at 230°C and 2.16 kg: 7.0 g/10 min,)

The total of the mixture of the polypropylene-based resin was defined as 100 parts by weight, erucic acid amide was added by 320 ppm as an organic lubricant, and silica having an aver**age particle diameter of 4 μm as an inorganic anti**-blocking agent was added such that the content thereof became 2400 wt ppm in the resin composition. These raw materials were mixed so as to be uniform, whereby a mixed raw material for manufacturing a polyolefin-based resin film was obtained.

(Melt extrusion)

The mixed raw material to be used in the intermediate layer was introduced by using a 3-stage-type single-screw extruder having a screw diameter of 90 mm, and the mixed raw material for the laminate layer and the mixed raw material for the heat-seal layer were respectively introduced by using 3-stage-type single-screw extruders having a diameter of 45 mm and a diameter of 65 mm, such that the order of laminate layer/intermediate layer/heat-seal layer was realized. The raw materials were introduced to a T slot-type die designed such that: a preland was formed with two stages so as to have a width of 800 mm; and the shape of the step portion was curved so as to cause the flow of the melted resin to be uniform, thereby causing the flow in the die to be uniform. The extrusion was performed at an outlet temperature of the die being 230°C. The thickness ratios of the laminate layer/intermediate layer/heat-seal layer were 25%/50%/25%, respectively. The laminate layer, the intermediate layer, and the heat-seal layer were all fed with the above mixed raw materials in the same manner.

(Cooling)

A melted resin sheet extruded through the die was cooled by a cooling roll at 21°C to obtain an unstretched polyolefin-based resin film having a thickness of 210 $\mu$m. During the cooling using the cooling roll, air trapping between the melted resin sheet and the cooling roll was prevented by allowing air nozzles to fix both ends of the film on the cooling roll, allowing an air knife to press the melted resin sheet against the cooling roll over the entire width thereof, and at the same time operating a vacuum chamber. The air nozzles for fixing both edges of the film were provided in series in the longitudinal direction of the film. The die was surrounded with a sheet to prevent the melted resin sheet from being exposed to wind.

(Pre-heating)

The unstretched sheet was guided to heated rolls to pre-heat the sheet by contact with the rolls. The temperature of the pre-heating rolls was set to 105°C. Both surfaces of the film were pre-heated using the rolls.

(Longitudinal direction stretching)

The unstretched sheet was guided to a longitudinal stretching machine and stretched 3.5 times using a speed difference between rolls to have a thickness of 60 $\mu$m. The temperature of the stretching rolls was set to 105°C.

(Annealing treatment)

Heat treatment was performed at 130°C using annealing rolls. Both surfaces of the film were subjected to heat treatment using the rolls.

(Relaxation step)

The speed of the roll provided downstream of the annealing rolls was reduced by 5% as a relaxation rate relative to that of the annealing roll, whereby the film was allowed to be relaxed.

(Corona treatment)

One surface (lamination surface) of the film was subjected to corona treatment.

(Winding)

The film was produced at a speed of 20 m/min. The edges of the produced film were trimmed and wound into a roll.

(Production of laminated body)

A polyolefin-based resin film obtained in the examples and the comparative examples was dry-laminated on a biaxially-stretched nylon film manufactured by TOYOBO CO., LTD (N1102, thickness: 15 $\mu$m, orientation angle: 22° with respect to the longitudinal direction) as a base film using an ester-based adhesive obtained by mixing 33.6 parts by weight of a main agent (TM569 manufactured by Toyo-Morton, Ltd.), 4.0 parts by weight of a curing agent (CAT10L manufactured by Toyo-Morton, Ltd.), and 62.4 parts by weight of ethyl acetate so that the amount of the adhesive on the base film applied was 3.0 g/m$^2$. The dry-laminated product was wound up, and then was maintained at 40°C for 3 days to perform aging. In this way, a laminated body was obtained.

(Examples 2 to 5)

A polyolefin-**based resin film of 60 μm was obtained by the same method as in** Example 1 except that the raw materials shown in Table 1 were used, the thickness of an unstretched polyolefin-**based resin film was set to 240 μm, and the longitud**inal stretch ratio was set to 4.0 times. A laminated body was obtained in the same manner as in Example 1.

(Comparative Example 1)

A polyolefin-**based resin film of 60 μm was obtained by the same method as in** Example 1 except that the raw materials shown in Table 2 were used. A laminated body was obtained in the same manner as in Example 1.

(Comparative Example 2)

A polyolefin-**based resin film of 60 μm was obtained by the same method as in** Example 1 except that the raw materials shown in Table 2 were used, the thickness of an unstretched polyolefin-**based resin film was set to 240 μm, and the longitudinal stretch ratio was** set to 4.0 times. A laminated body was obtained in the same manner as in Example 1.

(Comparative Example 3)

A polyolefin-**based resin film of 60 μm was obtained by the same method as in** Example 1 except that the raw materials shown in Table 2 were used, the thickness of an unstretched polyolefin-**based resin film was set to 150 μm, the longitudinal stretch ratio was** set to 2.5 times, and the relaxation rate in the relaxation step was 3%. A laminated body was obtained in the same manner as in Example 1.

(Comparative Example 4)

A polyolefin-**based resin film of 60 μm was obtained by the same method as in** Example 1 except that the raw materials shown in Table 2 were used, the thickness of an unstretched polyolefin-**based resin film was set to 360 μm, and the longitudinal stretch ratio was** set to 6.0 times. A laminated body was obtained in the same manner as in Example 1.

(Comparative Example 5)

A polyolefin-**based resin film of 60 μm was obtained by the same method as in** Example 1 except that the raw materials shown in Table 2 were used, the thickness of an unstretched polyolefin-based resin film was set to **150 μm, the longitudinal stretch ratio was set** to 2.5 times, and the relaxation rate in the relaxation step was 3%. A laminated body was obtained in the same manner as in Example 1.

(Comparative Example 6)

A polyolefin-**based resin film of 60 μm was obtained by the same method as in** Example 1 except the relaxation rate was 0%. A laminated body was obtained in the same manner as in Example 1.

(Comparative Example 7)

A polyolefin-based resin film of 6**0 μm was obtained by the same method as in** Example 1 except that annealing treatment is not provided and the relaxation rate was 0 %. A laminated body was obtained in the same manner as in Example 1.

(Comparative Example 8)

A polyolefin-based res**in film of 60 μm was obtained by the same method as in** Example 2 except the relaxation rate was 0%. A laminated body was obtained in the same manner as in Example 2.

In Comparative Example 1 and Comparative Example 2, since a metallocene-based ethylene-propylene random copolymer was not used, the frequency of occurrence of whiskers was high.

In Comparative Example 3 and Comparative Example 5, since the stretch ratio was low and the orientation coefficient in the x-axis direction was low, straight cuttability was inferior.

In Comparative Example 4, since the stretch ratio was high and the orientation coefficient in the x-axis direction was high, the heat shrinkage ratio was high.

In Comparative Example 6 to Comparative Example 8, since the relaxation rate after annealing was 0%, the heat shrinkage ratio was high.

Table 1 and Table 2 show the above results.

[Table 1]

| | | | Example 1 | Example 2 | Example 3 | Example 4 | Example 6 |
|---|---|---|---|---|---|---|---|
| Laminate layer and Intermediate layer | Raw material A | parts by weight | 30 | 30 | - | 30 | 90 |
| | Raw material B | parts by weight | - | - | 30 | - | - |
| | Raw material C | parts by weight | 60 | 60 | 60 | 60 | - |
| | Raw material D | parts by weight | 2.7 | 2.7 | 2.7 | - | 2.7 |
| | Raw material E | parts by weight | 7.3 | 7.3 | 7.3 | 10.0 | 7.3 |
| Heat-seal layer | Raw material A | parts by weight | 30 | 30 | - | 35 | 90 |
| | Raw material B | parts by weight | - | - | 30 | - | - |
| | Raw material C | parts by weight | 60 | 60 | 60 | 60 | - |
| | Raw material D | parts by weight | 2.7 | 2.7 | 2.7 | - | 2.7 |
| | Raw material E | parts by weight | 7.3 | 7.3 | 7.3 | 6.0 | 7.3 |
| Anti-blocking agent | Concentration | ppm | 2400 | 2400 | 2400 | 2400 | 2400 |
| | kind, average particle diameter | - | silica 4.0μm | silica 4.0μm | silica 4.0μm | silica 4.0μm | silica 4.0μm |
| Layer thickness | Laminate layer | μm | 15 | 16 | 16 | 16 | 16 |
| | Intermediate layer | μm | 30 | 30 | 30 | 30 | 30 |
| | Heat-seal layer | μm | 15 | 16 | 16 | 16 | 16 |
| | Total | μm | 60 | 60 | 60 | 60 | 60 |
| Preheating temperature | | °C | 106 | 106 | 106 | 106 | 106 |
| Stretch temperature | | °C | 106 | 106 | 106 | 106 | 105 |

| | | | Example 1 | Example 2 | Example 3 | Example 4 | Example 6 |
|---|---|---|---|---|---|---|---|
| Stretch direction | | - | longitudinal | longitudinal | longitudinal | longitudinal | longitudinal |
| Stretch ratio | | times | 3.5 | 4.0 | 4.0 | 4.0 | 4.0 |
| Longitudinal relaxation rate | | % | 6 | 6 | 6 | 6 | 6 |
| Annealing treatment temperature | | °C | 130 | 130 | 130 | 130 | 130 |
| x-axis orientation | $\triangle Nx$ | - | 0.0167 | 0.0186 | 0.0206 | 0.0189 | 0.0171 |
| Heat shrinkage ratio 120°C, 30min | Longitudinal direction | % | 6.5 | 7.7 | 7.1 | 7.4 | 7.0 |
| | Width direction | % | 1.4 | 1.7 | 1.1 | 1.5 | 1.1 |
| Haze | | % | 6.4 | 8.8 | 7.7 | 9.1 | 7.2 |
| Friction coefficient | heat-seal surfaces to each other | - | 0.19 | 0.19 | 0.19 | 0.17 | 0.17 |
| Tear strength | Longitudinal direction | N | 0.49 | 0.40 | 0.37 | 0.42 | 0.35 |
| | Width direction | N | 9.2 | 8.0 | 7.6 | 8.8 | 8.4 |
| Piercing strength | | N | 6.1 | 8.8 | 6.3 | 6.0 | 5.7 |
| | | N/$\mu$m | 0.10 | 0.11 | 0.11 | 0.10 | 0.10 |
| Wetting tension | Corona treated surface | mN/m | 42 | 42 | 42 | 42 | 42 |
| Accelerated blocking strength | heat-seal surface | mN/70mm | 310 | 301 | 298 | 288 | 280 |
| Finishing of bag-making* | | - | ○ | ○ | ○ | ○ | ○ |
| Heat-seal strength* | Longitudinal direction | N/15mm | 62 | 60 | 48 | 50 | 48 |
| Heat-sealing start temperature. | Longitudinal direction | °C | 156 | 162 | 161 | 162 | 161 |
| Bag-breaking resistance. | | - | ○ | ○ | ○ | ○ | ○ |
| Piercing strength * | before retorting | N | 21.9 | 21.6 | 24.0 | 23.6 | 22.6 |
| Shrinkage ratio during retorting. 115°C, 30min | Longitudinal direction | % | 3.1 | 3.5 | 3.2 | 3.5 | 3.4 |
| | Width direction | % | 3.0 | 3.3 | 3.0 | 3.2 | 3.0 |
| Straight cuttability* | Stretch direction | mm | 8 | 6 | 6 | 6 | 6 |
| "Nakiwakare" ' | Stretch direction | mm | 6 | 3 | a | a | 3 |

(continued)

| | | | Example 1 | Example 2 | Example 3 | Example 4 | Example 6 |
|---|---|---|---|---|---|---|---|
| Tear strength * | Longitudinal direction | N | 0.90 | 0.87 | 0.83 | 0.88 | 0.82 |
| | Width direction | N | not measured * | not measured * | not measured * | not measured * | not measured * |
| Whisker occurrence rate * | Longitudinal direction | % | 1 | 2 | 2 | 2 | 1 |

* is evaluation at a laminated body.
"Not measured*" denotes that the film was broken in the stretch direction and no measurement value was obtained.

[Table 2]

| | | | Comparative Example 1 | Comparative Example 2 | Comparative Example 3 | Comparative Example 4 | Comparative Example 6 | Comparative Example 6 | Comparative Example 7 | Comparative Example 8 |
|---|---|---|---|---|---|---|---|---|---|---|
| Laminate layer and Intermediate layer | Raw material A | parts by weight | - | - | 30 | 30 | - | 30 | 30 | 30 |
| | Raw material B | parts by weight | - | - | - | - | - | - | - | - |
| | Raw material C | parts by weight | 90 | 90 | 60 | 60 | 90 | 60 | 60 | 60 |
| | Raw material D | parts by weight | 2.7 | 2.7 | 2.7 | 2.7 | 2.7 | 2.7 | 2.7 | 2.7 |
| | Raw material E | parts by weight | 7.3 | 7.3 | 7.3 | 7.3 | 7.3 | 7.3 | 7.3 | 7.3 |
| Heat-seal layer | Raw material A | parts by weight | - | - | 30 | 30 | - | 30 | 30 | 30 |
| | Raw material B | parts by weight | - | - | - | - | - | - | - | - |
| | Raw material C | parts by weight | 90 | 90 | 60 | 60 | 90 | 60 | 60 | 60 |
| | Raw material D | parte by weight | 2.7 | 2.7 | 2.7 | 2.7 | 2.7 | 2.7 | 2.7 | 2.7 |
| | Raw material E | parts by weight | 7.3 | 7.3 | 7.3 | 7.8 | 7.3 | 7.8 | 7.3 | 7.8 |
| Anti-blocking agent | Concentration | ppm | 2400 | 2400 | 2400 | 2400 | 2400 | 2400 | 2400 | 2400 |
| | kind, average particle diameter | - | silica 4.0μm | silica 4.0μm | silica 4.0μm | silica 4.0μm | silica 4.0μm | silica 4.0μm | silica 4.0μm | silica 4.0μm |
| Layer thickness | Laminate layer | μm | 15 | 15 | 16 | 16 | 16 | 16 | 16 | 16 |
| | Intermediate layer | μm | 30 | 30 | 30 | 30 | 30 | 30 | 30 | 30 |
| | Heat-seal layer | μm | 16 | 16 | 16 | 16 | 16 | 16 | 16 | 16 |
| | Total | μm | 60 | 60 | 60 | 60 | 60 | 60 | 60 | 60 |

EP 4 130 113 A1

| | | Comparative Example 1 | Comparative Example 2 | Comparative Example 3 | Comparative Example 4 | Comparative Example 6 | Comparative Example 6 | Comparative Example 7 | Comparative Example 8 |
|---|---|---|---|---|---|---|---|---|---|
| Preheating temperature | °C | 106 | 106 | 106 | 106 | 106 | 106 | 106 | 106 |
| Stretch temperature | °C | 106 | 106 | 106 | 106 | 106 | 106 | 106 | 105 |
| Stretch direction | - | longitudinal | longitudinal | longitudinal | longitudinal | longitudinal | longitudinal | longitudinal | longitudinal |
| Stretch ratio | times | 8.6 | 4.0 | 2.6 | 6.0 | 2.5 | 9.6 | 8.6 | 4.0 |
| Longitudinal relaxation rate | % | 6 | 6 | 3 | 6 | 3 | 0 | 0 | 0 |
| Annealing treatment temperature | °C | 120 | 180 | 130 | 130 | 180 | 130 | - | 130 |
| x-axis orientation | ΔNx | - | 0.0210 | 0.0228 | 0.0120 | 0.0266 | 0.0125 | 0.0189 | 0.0161 | 0.0240 |
| Heat shrinkage ratio 120°C, SOmin | Longitudinal direction | % | 16.4 | 18.6 | 6.0 | 13.1 | 9.4 | 11.2 | 23.8 | 26.5 |
| | Width direction | % | -1.9 | -2.0 | 1.0 | -8.6 | -1.1 | -1.5 | -2.6 | -2.9 |
| Haze | % | 15.3 | 20.4 | 4.6 | 12.3 | 10.2 | 6.2 | 6.9 | 10.6 |
| Friction coefficient | heat-seal surfaces to each other | - | 0.19 | 0.19 | 0.19 | 0.16 | 0.18 | 0.18 | 0.18 | 0.17 |
| Tear strength | Longitudinal direction | N | 0.45 | 0.88 | 0.88 | 0.26 | 0.87 | 0.4 | 0.44 | 0.82 |
| | Width direction | N | 9.6 | 8.1 | not measured * | not measured * | not measured * | 9.1 | 9.4 | 7.6 |
| Piercing strength | | N | 8.9 | 7.1 | 5.5 | 10.6 | 6.6 | 8.1 | 6.8 | 7.8 |
| | | N/μm | 0.12 | 0.12 | 0.09 | 0.18 | 0.09 | 0.10 | 0.11 | 0.19 |
| Wetting tension | Corona treated surface | mN/m | 42 | 42 | 42 | 42 | 42 | 42 | 42 | 42 |
| Accelerated blocking strength | heat-seal surface | mN/70mm | 818 | 309 | 345 | 296 | 849 | 304 | 816 | 281 |
| Finishing of bag-making* | - | ○ | ○ | ○ | × | ○ | ○ | ○ | ○ |

EP 4 130 113 A1

(continued)

| | | | Comparative Example 1 | Comparative Example 2 | Comparative Example 3 | Comparative Example 4 | Comparative Example 6 | Comparative Example 6 | Comparative Example 7 | Comparative Example 8 |
|---|---|---|---|---|---|---|---|---|---|---|
| Heat-seal strength. | Longitudinal direction | N/15mm | 61 | 60 | 64 | 41 | 64 | 62 | 66 | 42 |
| Heat-sealing start temperature* | Longitudinal direction | °C | 172 | 174 | 149 | 166 | 168 | 163 | 168 | 166 |
| Bag-breaking resistance* | | - | ○ | ○ | ○ | × | ○ | ○ | ○ | Δ |
| Piercing strength * | before retorting | N | 22.8 | 28.9 | 17.5 | 24.6 | 17.7 | 22.8 | 22.8 | 24.6 |
| Shrinkage ratio during retorting. 115°C, SOmin | Longitudinal direction | % | 6.1 | 8.9 | 2.9 | 9.1 | 3.9 | 9.6 | 12.1 | 13.6 |
| | Width direction | % | 2.2 | 2.2 | 2.6 | 3.9 | 2.7 | 2.2 | 2.6 | 2.1 |
| Straight cuttability * | Stretch direction | mm | 8 | 6 | 18 | 1 | 16 | 8 | 8 | 2 |
| "Nakiwakare" * | Stretch direction | mm | 6 | 3 | 26 | 1 | 28 | 6 | 8 | 3 |
| Tear strength * | Longitudinal direction | N | 0.95 | 0.89 | 1.55 | 0.47 | 1.46 | 0.94 | 0.98 | 0.73 |
| | Width direction | N | not measured * | not measured * | not measured * | not measured * | not measured * | not measured * | not measured * | not measured * |
| Whisker occurrence rate * | Longitudinal direction | % | 44 | 62 | 0 | 4 | 0 | 2 | 1 | 6 |

* is evaluation at a laminated body.
"Not measured*" denotes that the film was broken in the stretch direction and no measurement value was obtained.

EP 4 130 113 A1

In Tables 1 and 2 showing the evoluation results, "not measured∗" means that the film was cut off the stretch direction during property evaluation so that a measured value was not obtained.

INDUSTRIAL APPLICABILITY

According to the present invention, it is possible to provide a packaging body excellent in transparency, heat-sealability, bag-making processability, and bag-breaking resistance; that is easily torn without "Nakiwakare"; and that is less likely to have occurrence of whiskers at the time of opening, and thus, the present invention significantly contribute to industries.

**Claims**

1.   A polyolefin-based resin film formed from a polypropylene-based resin composition, the polyolefin-based resin film containing:

in a total of 100 parts by weight of the polypropylene-based resin composition,
20 parts by weight or more and 95 parts by weight or less of a propylene-α olefin random copolymer containing a metallocene-based olefin polymerization catalyst;
0 parts by weight or more and 75 parts by weight or less of a propylene-α olefin random copolymer containing a Ziegler-Natta-based olefin polymerization catalyst; and
5 parts by weight or more and 15 parts by weight or less of at least one type of an elastomer selected from the group consisting of an ethylene-butene copolymer elastomer, a propylene-butene copolymer elastomer, and an ethylene-propylene copolymer elastomer, wherein
a heat shrinkage ratio in a direction in which a heat shrinkage ratio is larger among a longitudinal direction and a width direction of the polyolefin-based resin film is 1% or more and 10% or less, and
**an orientation coefficient △Nx in an x**-axis direction calculated from a refractive index of the polyolefin-based resin film is 0.0130 or more and 0.0250 or less.

2.   The polyolefin-based resin film according to claim 1, comprising a configuration of a plurality of layers including at least two layers.

3.   The polyolefin-based resin film according to claim 1 or 2, wherein
a haze of the polyolefin-based resin film is 3% or more and 35% or less.

4.   The polyolefin-based resin film according to any one of claims 1 to 3, wherein
a tear strength in the direction in which the heat shrinkage ratio is larger among the longitudinal direction and the width direction of the polyolefin-based resin film is not larger than 0.7 N.

5.   The polyolefin-based resin film according to any one of claims 1 to 4, wherein
a concentration of an anti-blocking agent of a layer positioned on at least one surface of the polyolefin-based resin film is 3000 ppm or less.

6.   A laminated body comprising the polyolefin-based resin film according to any one of claims 1 to 5, and a biaxially oriented film formed from at least one type of a polymer selected from the group consisting of a polyamide resin film, a polyester resin film, and a polypropylene resin film.

7.   The laminated body according to claim 6, wherein

a straight cuttability in a direction in which a heat shrinkage ratio is larger among the longitudinal direction and width direction of the laminated body is not larger than 10 mm, and
a tear strength in the direction in which a heat shrinkage ratio is larger among the longitudinal direction and width direction of the laminated body is not larger than 1.2 N.

8.   A packaging body formed from the laminated body according to claim 6 or 7.

## INTERNATIONAL SEARCH REPORT

| | International application No. |
|---|---|
| | PCT/JP2021/012698 |

**A. CLASSIFICATION OF SUBJECT MATTER**

Int.Cl. C08J5/18(2006.01)i, B32B27/32(2006.01)i, B65D65/40(2006.01)i, C08L23/00(2006.01)i, B29C55/04(2006.01)n, B29K23/00(2006.01)n
FI: C08J5/18CES, B32B27/32Z, B65D65/40D, C08L23/00, B29C55/04, B29K23:00

According to International Patent Classification (IPC) or to both national classification and IPC

**B. FIELDS SEARCHED**

Minimum documentation searched (classification system followed by classification symbols)
Int.Cl. C08J5/18, B32B27/32, B65D65/40, C08L23/00, B29C55/04, B29K23/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-187256 A (JAPAN POLYPROPYLENE CORPORATION) 29 October 2015 (2015-10-29), claims, paragraph [0057], examples | 1-8 |
| A | Microfilm of the specification and drawings annexed to the request of Japanese Utility Model Application No. 118570/1972 (Laid-open No. 111423/1974) (TORAY INDUSTRIES, INC.) 24 September 1974 (1974-09-24), claims, examples | 1-8 |
| A | JP 63-132050 A (TOYOBO CO., LTD.) 04 June 1988 (1988-06-04), claims, examples | 1-8 |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June 2021 | 15 June 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/012698 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-508416 A (DOW GLOBAL TECHNOLOGIES INC.) 31 March 2005 (2005-03-31), claims, examples | 1-8 |
| A | JP 2013-542269 A (TORAY PLASTICS (AMERICA), INC.) 21 November 2013 (2013-11-21), claims, examples | 1-8 |

Form PCT/ISA/210 (second sheet) (January 2015)

**INTERNATIONAL SEARCH REPORT**
Information on patent family members

| | | International application No. |
|---|---|---|
| | | PCT/JP2021/012698 |

```
JP 2015-187256 A    29 October 2015      (Family: none)

JP 49-111423 U1     24 September 1974    US 3887745 A
                                         claims, examples
                                         GB 1416357 A
                                         DE 2339892 A

JP 63-132050 A      04 June 1988         (Family: none)

JP 2005-508416 A    31 March 2005        WO 2003/040202 A2
                                         claims, examples
                                         CN 101319050 A

JP 2013-542269 A    21 November 2013     WO 2012/016075 A2
                                         claims, examples
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5790497 B
- JP 5411935 B
- JP 2018079583 A
- JP 2014141302 A
- JP 2012500307 T
- WO 2019123944 A1